(19)

**Europäisches Patentamt**
**European Patent Office**
**Office européen des brevets**

(11)  **EP 4 597 522 A1**

(12)  # EUROPEAN PATENT APPLICATION
published in accordance with Art. 153(4) EPC

(43) Date of publication:
**06.08.2025  Bulletin 2025/32**

(21) Application number: **23871638.5**

(22) Date of filing: **29.08.2023**

(51) International Patent Classification (IPC):
$H01B\ 1/24\ ^{(2006.01)}$   $H01M\ 4/13\ ^{(2010.01)}$
$H01M\ 4/131\ ^{(2010.01)}$   $H01M\ 4/139\ ^{(2010.01)}$
$H01M\ 4/1391\ ^{(2010.01)}$   $H01M\ 4/62\ ^{(2006.01)}$

(52) Cooperative Patent Classification (CPC):
**B82Y 30/00; B82Y 40/00; C01B 32/156;**
**H01B 1/24; H01M 4/13; H01M 4/131; H01M 4/139;**
**H01M 4/1391; H01M 4/62;** Y02E 60/10

(86) International application number:
**PCT/JP2023/031076**

(87) International publication number:
**WO 2024/070397 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022  JP 2022158544**

(71) Applicant: DKS Co. Ltd.
**Kyoto-shi, Kyoto 600-8873 (JP)**

(72) Inventors:
• **SOFUE Ayano**
 **kyoto-shi, Kyoto 600-8873 (JP)**
• **NISHIKAWA Akiyoshi**
 **kyoto-shi, Kyoto 600-8873 (JP)**
• **NAKAGAWA Naoki**
 **kyoto-shi, Kyoto 600-8873 (JP)**

(74) Representative: **TBK**
**Bavariaring 4-6**
**80336 München (DE)**

(54)  **CARBON NANOTUBE DISPERSED LIQUID, ELECTRODE COATING MATERIAL USING SAME, ELECTRODE AND NONAQUEOUS ELECTROLYTE SECONDARY BATTERY**

(57)     Provided is a carbon nanotube dispersion liquid that exhibits good dispersion stability of single-walled carbon nanotubes.

A carbon nanotube dispersion liquid according to an embodiment includes single-walled carbon nanotubes, carboxymethyl cellulose and/or a salt thereof, and water, in which a content of the single-walled carbon nanotubes is 0.47% to 1.00% by mass. The carboxymethyl cellulose and/or the salt thereof includes at least one having a degree of etherification of 0.65 to 0.85 and a weight-average molecular weight of 120,000 to 250,000. A content of the carboxymethyl cellulose and/or the salt thereof is 120 to 220 parts by mass relative to 100 parts by mass of the single-walled carbon nanotubes.

**EP 4 597 522 A1**

## Description

Technical Field

Embodiments of the present invention relate to a carbon nanotube dispersion liquid, an electrode coating material using the same, an electrode, and a nonaqueous electrolyte secondary battery.

Background Art

Carbon nanotubes have good electrical conductivity and are used as, for example, a conductive agent constituting an electrode in a nonaqueous electrolyte secondary battery such as a lithium-ion secondary battery. However, carbon nanotubes strongly aggregate due to van der Waals forces, resulting in difficulty in being uniformly dispersed in water.

It is known that carboxymethyl cellulose and/or a salt thereof is used as a dispersant in order to improve dispersibility of carbon nanotubes in water. For example, PTL 1 discloses a carbon nanotube dispersion liquid that includes carboxymethyl cellulose and/or a salt thereof having a weight-average molecular weight of 10,000 to 100,000 and a degree of etherification of 0.5 to 0.9, in which the product of a complex elastic modulus (Pa) and a phase angle (°) is 100 or more and 1,500 or less.

PTL 2 discloses a carbon nanotube dispersion liquid that includes carboxymethyl cellulose and/or a salt thereof having a degree of etherification of 0.5 to 1.2 and a 1% aqueous solution viscosity of 1 to 1,000 mPa·s.

PTL 3 discloses a carbon nanotube dispersion liquid in which carbon nanotubes are dispersed using carboxymethyl cellulose having a 3% aqueous solution viscosity of 2 to 200 mPa·s such that D10 is 0.3 to 1.0 μm, D50 is 3 to 10 μm, and D90 is 60 μm or less.

Citation List

Patent Literature

    PTL 1: Japanese Patent No. 6860740
    PTL 2: International Publication No. 2022/070810
    PTL 3: International Publication No. 2022/137977

Summary of Invention

Technical Problem

However, among carbon nanotubes, single-walled carbon nanotubes generally have a small fiber diameter, and it is difficult to stably disperse single-walled carbon nanotubes in water at high concentrations. Therefore, in the current situation, dispersion liquids of single-walled carbon nanotubes on the market have concentrations of 0.4% by mass or less. As for dispersion liquids including only single-walled carbon nanotubes as carbon nanotubes, PTLs 1 to 3 described above also specifically disclose, in Examples, only dispersion liquids having a maximum concentration of 0.4% by mass. Thus, there is a demand for a carbon nanotube dispersion liquid including single-walled carbon nanotubes at a higher concentration and having good dispersion stability. In addition, when the carbon nanotube dispersion liquid is used as, for example, an electrode coating material for a nonaqueous electrolyte secondary battery, it is desirable to exhibit a good battery performance.

An object of an embodiment of the present invention is to provide a carbon nanotube dispersion liquid that includes single-walled carbon nanotubes at a high concentration and exhibits good dispersion stability and that achieves a good battery performance when used as an electrode coating material for a nonaqueous electrolyte secondary battery.

Solution to Problem

The present invention includes embodiments described below.

[1] A carbon nanotube dispersion liquid including single-walled carbon nanotubes, carboxymethyl cellulose and/or a salt thereof, and water, wherein a content of the single-walled carbon nanotubes is 0.47% to 1.00% by mass, the carboxymethyl cellulose and/or the salt thereof includes at least one having a degree of etherification of 0.65 to 0.85 and a weight-average molecular weight of 120,000 to 250,000, and a content of the carboxymethyl cellulose and/or the salt thereof is 120 to 220 parts by mass relative to 100 parts by mass of the single-walled carbon nanotubes.

[2] An electrode coating material for a nonaqueous electrolyte secondary battery, the electrode coating material including the carbon nanotube dispersion liquid according to [1] and a silicon-based active material.

[3] A nonaqueous electrolyte secondary battery electrode produced using the electrode coating material according to [2].

[4] A nonaqueous electrolyte secondary battery including the nonaqueous electrolyte secondary battery electrode according to [3].

Advantageous Effects of Invention

An embodiment of the present invention can provide a carbon nanotube dispersion liquid that includes single-walled carbon nanotubes at a high concentration and exhibits good dispersion stability and that achieves a good battery performance when used as an electrode coating material for a nonaqueous electrolyte secondary battery.

Description of Embodiments

A carbon nanotube dispersion liquid according to the present embodiment includes (A) single-walled carbon nanotubes, (B) carboxymethyl cellulose and/or a salt thereof, and (C) water.

[(A) Single-walled carbon nanotube]

Among carbon nanotubes (hereinafter, may be referred to as CNTs), which are substances having a shape obtained by rolling a six-membered ring network (graphene sheet) constituted by carbon into a cylindrical form, single-walled carbon nanotubes are those having a single-layer structure and are also referred to as single-wall carbon nanotubes (hereinafter, may be referred to as SWCNTs).

Carbon nanotubes include single-walled carbon nanotubes (SWCNTs) having a single-layer structure and multi-walled carbon nanotubes (MWCNTs: multi-wall carbon nanotubes) having a multilayer structure. Single-walled carbon nanotubes have higher flexibility than multi-walled carbon nanotubes. Therefore, the use as a conductive agent of an electrode provides a good battery performance (cycle characteristics). More specifically, for example, the use of a silicon-based active material such as SiO as an active material of an electrode causes a large volume change due to expansion and contraction of the electrode during charging and discharging of the battery. Single-walled carbon nanotubes are more flexible than multi-walled carbon nanotubes and thus can follow the above volume change to improve cycle characteristics of the battery.

The diameter (fiber diameter) of single-walled carbon nanotubes is not particularly limited, and an average diameter may be, for example, 0.4 to 100 nm, 0.5 to 10 nm, or 1.0 to 5.0 nm. The length of single-walled carbon nanotubes is not particularly limited, and an average length may be, for example, 50 nm to 1 mm, or 0.5 to 100 $\mu$m. The aspect ratio (that is, the ratio of the average length to the average diameter) of single-walled carbon nanotubes is not particularly limited, and may be, for example, 10 or more, or 100 or more.

Herein, the average diameter and the average length of single-walled carbon nanotubes can be determined by measuring dimensions of 50 single-walled carbon nanotubes that are randomly selected in an atomic force microscope image, and taking the arithmetic averages of the dimensions. Lengths on the order of millimeters, which cannot be measured with an atomic force microscope, may be measured using an image obtained with a microscope.

In the carbon nanotube dispersion liquid according to the present embodiment, single-walled carbon nanotubes are basically used as carbon nanotubes, but multi-walled carbon nanotubes may be included as long as the effects of single-walled carbon nanotubes are not impaired. In one embodiment of the carbon nanotube dispersion liquid, the ratio of single-walled carbon nanotubes to the total carbon nanotubes is preferably 80% by mass or more, more preferably 95% by mass or more, still more preferably 98% by mass or more and may be 100% by mass.

[(B) Carboxymethyl cellulose and/or salt thereof]

Carboxymethyl cellulose and/or a salt thereof (hereinafter, may be referred to as "CMC") has a structure in which hydroxyl groups in glucose residues constituting cellulose are substituted with carboxymethyl ether groups. CMC may have carboxy groups (-COOH) or may have the form of a carboxylate, and both of these may be used in combination.

Examples of salts of carboxymethyl cellulose include alkali metal salts such as a sodium salt, a lithium salt, and a potassium salt; alkaline-earth metal salts such as a calcium salt and a magnesium salt; and organic salts such as an ammonium salt, an alkylamine salt, and an alkanolamine salt. Only any one of these salts may be included, or two or more of these salts may be included. Of these, alkali metal salts are preferred, and a sodium salt is more preferred.

In the present embodiment, as CMC, at least one having a degree of etherification of 0.65 to 0.85 and a weight-average molecular weight (Mw) of 120,000 to 250,000 is used. Use of CMC having a degree of etherification of 0.65 to 0.85 and a weight-average molecular weight of 120,000 to 250,000 enables dispersion stability of single-walled carbon nanotubes to be improved to improve the battery performance when the carbon nanotube dispersion liquid is used as an electrode coating material.

More specifically, when the degree of etherification of CMC is 0.65 or more, hydrophilicity can be improved to improve dispersibility and dispersion stability of single-walled carbon nanotubes. When the degree of etherification of CMC is 0.85 or less, adhesion to the single-walled carbon nanotubes is improved. Accordingly, aggregation of the single-walled carbon nanotubes is suppressed not only at the stage of a carbon nanotube dispersion liquid but also at the subsequent stage of an electrode coating material, and the battery performance can be improved. The degree of etherification of CMC is more preferably 0.70 to 0.80.

Herein, the degree of etherification of CMC is measured by the following method.

(Degree of etherification)

CMC (0.6 g) is dried at 105°C for four hours. The mass of the dried product is precisely weighed, and the dried product is then wrapped with filter paper and incinerated in a porcelain crucible. The incinerated product is transferred to a 500 mL beaker, and 250 mL of water and 35 mL of a 0.05 mol/L aqueous sulfuric acid solution are added thereto, and the resulting mixture is boiled for 30 minutes. After cooling, the excess acid is back-titrated with a 0.1 mol/L aqueous potassium hydroxide solution (phenolphthalein is used as an indicator). The degree of etherification is calculated by the following formula.

$$\text{Formula: (Degree of etherification)} = 162 \times A/(10000 - 80A)$$

A = (af - bf1)/mass of dried product (g)

A: amount (mL) of 0.05 mol/L aqueous sulfuric acid solution consumed by combined alkali in 1 g of sample
a: amount (mL) of 0.05 mol/L aqueous sulfuric acid solution used
f: titer of 0.05 mol/L aqueous sulfuric acid solution
b: amount (mL) of titration of 0.1 mol/L aqueous potassium hydroxide solution
f1: titer of 0.1 mol/L aqueous potassium hydroxide solution

When the weight-average molecular weight of CMC is 250,000 or less, the viscosity of the carbon nanotube dispersion liquid can be reduced, and dispersibility can be improved while the concentration of the single-walled carbon nanotubes is increased. When the weight-average molecular weight of CMC is 120,000 or more, adhesion to the single-walled carbon nanotubes can be improved to improve dispersibility and dispersion stability. More specifically, if the weight-average molecular weight of CMC is less than 120,000, CMC has a short molecular chain, and adhesion to the single-walled carbon nanotubes decreases. That is, CMC adheres to or separates from the single-walled carbon nanotubes. Accordingly, even if single-walled carbon nanotubes can be dispersed at the stage of a carbon nanotube dispersion liquid, CMC may separate from the single-walled carbon nanotubes, and the single-walled carbon nanotubes may aggregate at the subsequent stage of an electrode coating material, resulting in degradation of the battery performance. In contrast, when the weight-average molecular weight of CMC is 120,000 or more, adhesion to the single-walled carbon nanotubes can be improved to improve dispersion stability of the carbon nanotube dispersion liquid and to improve the battery performance. The weight-average molecular weight of CMC is preferably 130,000 to 200,000, more preferably 140,000 to 180,000.

Herein, the weight-average molecular weight of CMC is measured by gel permeation chromatography (GPC). More specifically, the measurement is performed by the following method.

(Weight-average molecular weight)

·Apparatus

High-speed HPLC: Prominence-i LC-2030, manufactured by Shimadzu Corporation, Detector: differential refractive index detector RID-20A, manufactured by Shimadzu Corporation, Column: TSKgel G3000SW + G4000SW + Guard column, manufactured by Tosoh Corporation

·Measurement method

A 0.08 mol/L aqueous sodium acetate solution was used as a mobile phase solvent, and about 66 mg of an active ingredient was dissolved in 10 mL of the mobile phase solvent. After filtration through a filter, 10 $\mu$L of the resulting solution was injected. Analytical conditions were as follows: flow rate [mL/min] = 0.70, column temperature = 40°C, measurement pressure [kg/cm$^2$] = 1 to 15, and measurement time [min] = 60. Polyethylene oxides having known molecular weights were used as standard substances.

In the present embodiment, in addition to CMC (B1) having a degree of etherification of 0.65 to 0.85 and a weight-average molecular weight of 120,000 to 250,000, another type of CMC (B2) may be used as CMC in combination. Specifically, in one embodiment, CMC serving as a component (B) may contain carboxymethyl cellulose and/or a salt thereof (B1) having a degree of etherification of 0.65 to 0.85 (preferably 0.70 to 0.80) and a weight-average molecular weight of 120,000 to 250,000 (preferably 130,000 to 200,000, more preferably 140,000 to 180,000) and another type of carboxymethyl cellulose and/or a salt thereof (B2).

Herein, as CMC (B1), one type of CMC in which the degree of etherification and the weight-average molecular weight satisfy the above ranges may be used alone, or two or more types of CMC in which the degree of etherification and the weight-average molecular weight satisfy the above ranges may be used.

As CMC (B2), CMC in which at least one of the degree of etherification and weight-average molecular weight is outside the above numerical ranges of CMC (B1) can be used. It is preferable to use, as CMC (B2), CMC in which the degree of etherification satisfies the numerical range of CMC (B1) and the weight-average molecular weight does not satisfy the range of CMC (B1). Such CMC (B2) includes CMC (B2-1) and CMC (B2-2) described below, and either one may be used, or both may be used in combination.

·CMC (B2-1): Carboxymethyl cellulose and/or a salt thereof having a degree of etherification of 0.65 to 0.85 (preferably 0.70 to 0.80) and a weight-average molecular weight of less than 120,000 (preferably 50,000 to 100,000)
·CMC (B2-2): Carboxymethyl cellulose and/or a salt thereof having a degree of etherification of 0.65 to 0.85 (preferably 0.70 to 0.80) and a weight-average molecular weight of more than 250,000 (preferably 300,000 to 1,000,000, more preferably 400,000 to 900,000)

In one embodiment of the carbon nanotube dispersion liquid, the ratio of CMC (B1) to the entirety of CMC is preferably 30% by mass or more, more preferably 60% by mass or more, still more preferably 80% by mass or more, and may be 100% by mass. Specifically, CMC serving as the component (B) may be constituted by 30% to 100% by mass (preferably 60% to 100% by mass, more preferably 80% to 100% by mass) of CMC (B1) and 0% to 70% by mass (preferably 0% to 40% by mass, more preferably 0% to 20% by mass) of CMC (B2-1) and/or CMC (B2-2). In this case, CMC (B2-1) and/or CMC (B2-2) is an optional component, and thus the content thereof may be 0% by mass, or CMC (B2-1) and/or CMC (B2-2) may be contained in an amount of 5% by mass or more (preferably 10% by mass or more).

[Carbon nanotube dispersion liquid]

The carbon nanotube dispersion liquid according to the present embodiment includes water as a component (C) together with the component (A) and the component (B) described above, and is a dispersion liquid including carbon nanotubes dispersed in water.

Water serving as a dispersion medium may optionally contain a water-soluble organic solvent. Examples of water-soluble organic solvents include organic solvents miscible with water, such as methanol, ethanol, propanol, butanol, methyl cellosolve, ethyl cellosolve, butyl cellosolve, acetone, N-methyl-2-pyrrolidone (NMP), N,N-dimethylformamide (DMF), dimethyl sulfoxide, pyrrolidine, 2-pyrrolidone, and dimethyl acetamide. Any one of these may be used, or two or more of these may be used in combination. In one embodiment, preferably, the carbon nanotube dispersion liquid contains only water as the dispersion medium and contains no water-soluble organic solvents.

In the carbon nanotube dispersion liquid, the content of single-walled carbon nanotubes serving as the component (A) (that is, the amount of single-walled carbon nanotubes contained in 100% by mass of the carbon nanotube dispersion liquid) is 0.47% to 1.00% by mass. As described above, while single-walled carbon nanotubes have the advantage of being more flexible than multi-walled carbon nanotubes, single-walled carbon nanotubes have poor dispersibility and dispersion stability in water compared with multi-walled carbon nanotubes. For example, whereas multi-walled carbon nanotubes can be stably dispersed even at a concentration of about 5% by mass, it has been difficult to date to stably obtain a dispersion liquid of single-walled carbon nanotubes having a concentration of more than 0.4% by mass. According to the present embodiment, the use of specific CMC serving as the component (B) can provide a carbon nanotube dispersion liquid having a high single-walled carbon nanotube content of 0.47% by mass or more and having good dispersibility and dispersion stability.

In the carbon nanotube dispersion liquid, the content of the single-walled carbon nanotubes is preferably 0.57% to 0.95% by mass, more preferably 0.65% to 0.90% by mass.

In the carbon nanotube dispersion liquid, the content of CMC serving as the component (B) is 120 to 220 parts by mass relative to 100 parts by mass of the single-walled carbon nanotubes serving as the component (A). That is, the mass ratio of (B)/(A) is set in a range of 1.20 to 2.20. When the mass ratio of (B)/(A) is 1.20 or more, dispersibility and dispersion stability of single-walled carbon nanotubes can be improved, and electrode coatability and the battery performance can be improved. When the mass ratio (B)/(A) is 2.20 or less, electrode coatability and the battery performance can be improved while the viscosity of the carbon nanotube dispersion liquid is reduced.

The mass ratio of (B)/(A) is preferably 1.30 to 2.15, more preferably 1.40 to 1.70, still more preferably 1.50 to 1.65.

The amount of CMC serving as the component (B) contained in 100% by mass of the carbon nanotube dispersion liquid is not particularly limited and may be, for example, 0.61% to 2.15% by mass, 0.74% to 2.04% by mass, or 0.84% to 1.94% by mass.

In the carbon nanotube dispersion liquid, the content of water serving as the component (C) is not particularly limited and may be 50% to 98.92% by mass, 70% to 98.8% by mass, 90% to 98.7% by mass, or 95.0% to 98.5% by mass relative to 100% by mass of the carbon nanotube dispersion liquid.

The viscosity of the carbon nanotube dispersion liquid is not particularly limited, and a viscosity at 25°C is preferably less than 8 Pa·s, more preferably less than 6 Pa·s, still more preferably less than 4 Pa·s.

The carbon nanotube dispersion liquid according to the present embodiment may contain, besides the components (A) to (C), the water-soluble organic solvents described above and various other additives as needed. Examples of additives include conductive agents other than the component (A), water-soluble polymers other than the component (B), dispersants, surfactants, humectants, defoaming agents, and pH adjusters.

The method for preparing the carbon nanotube dispersion liquid is not particularly limited. The carbon nanotube dispersion liquid can be prepared by, for example, mixing the component (A) and the component (B) with water serving as the component (C), and subjecting the resulting mixture to a dispersion treatment using a dispersing device such as a Homodisper, a high-pressure homogenizer, or an ultrasonic homogenizer. In one embodiment, the dispersion treatment is preferably performed using a dispersing device, such as a homogenizer, equipped with a circulation unit, while circulating the liquid mixture including the components (A) to (C).

[Electrode coating material]

The carbon nanotube dispersion liquid described above can be used as an electrode coating material for a nonaqueous electrolyte secondary battery. The electrode coating material according to one embodiment includes the carbon nanotube dispersion liquid described above and a silicon-based active material.

Silicon-based active materials can achieve higher capacities than carbon-based materials such as graphite; however, as described above, such silicon-based active materials undergo large volume changes during charging and discharging. The electrode coating material according to the above embodiment includes, as carbon nanotubes, single-walled carbon nanotubes having good flexibility, and thus can follow the volume change during charging and discharging and improve cycle characteristics of the battery. Accordingly, both an increase in the capacity and cycle characteristics can be achieved.

Examples of silicon-based active materials include silicon oxides (hereinafter referred to as SiO) represented by $SiO_x$ ($0.5 \leq x \leq 1.6$) and silicon-containing compounds in which Si fine particles are dispersed in a lithium silicate phase represented by $Li_{2y}SiO_{(2+y)}$ ($0 < y < 2$).

The amount of carbon nanotube dispersion liquid blended in the electrode coating material is not particularly limited, and may be 0.05% to 0.5% by mass or 0.07% to 0.2% by mass in terms of single-walled carbon nanotube content relative to 100% by mass of the solid content (non-volatile content excluding the dispersion medium, the same applies hereinafter) of the electrode coating material. The content of the silicon-based active material in the electrode coating material is also not particularly limited, and may be 10% to 90% by mass or 15% to 35% by mass relative to 100% by mass of the solid content of the electrode coating material.

The electrode coating material may contain, besides the carbon nanotube dispersion liquid and the silicon-based active material, for example, various components such as electrode active materials other than the silicon-based active material, conductive agents other than carbon nanotubes, binders, viscosity improvers, dispersants, defoaming agents, leveling agents, and solvents (for example, water) as needed.

The electrode active materials other than the silicon-based active material may be known positive electrode active materials and negative electrode active materials. The electrode coating material according to the present embodiment is preferably used for producing a negative electrode of a nonaqueous electrolyte secondary battery. Therefore, various negative electrode active materials can be used as the electrode active materials in combination with the silicon-based active material. Examples thereof include graphite (carbon-based active materials) such as natural graphite, artificial graphite, non-graphitizable carbon, and graphitizable carbon; metal materials such as metallic lithium, alloys, and tin compounds; lithium transition metal nitrides, crystalline metal oxides, amorphous metal oxides, and conductive polymers. Any one of these may be used, or two or more of these may be used in combination. The amount of electrode active material in the electrode coating material is not particularly limited, and a total amount including the silicon-based active material may be 80% to 97% by mass, or 93% to 97% by mass relative to 100% by mass of the solid content of the electrode coating material.

Examples the conductive agents other than carbon nanotubes include, but are not particularly limited to, carbon black such as acetylene black and Ketjenblack. The amount of conductive agent in the electrode coating material is not particularly limited, and a total amount including the single-walled carbon nanotubes may be 0.15% to 4.3% by mass, or 0.16% to 2.2% by mass relative to 100% by mass of the solid content of the electrode coating material.

Examples of binders (binder resins) include, but are not particularly limited to, various resin emulsions such as styrene butadiene rubber (SBR) emulsions, polyurethane emulsions, polyvinyl acetate emulsions, and acrylic resin emulsions. The amount of binder in the electrode coating material is not particularly limited and may be 1.5% to 9.5% by mass, or 2% to 4% by mass relative to 100% by mass of the solid content of the electrode coating material.

The viscosity improver is not particularly limited. For example, CMC that is the same as the component (B) may be additionally added, or CMC that is different from the component (B) may be separately added.

[Nonaqueous electrolyte secondary battery]

A nonaqueous electrolyte secondary battery according to an embodiment includes an electrode produced using the electrode coating material described above. Such a nonaqueous electrolyte secondary battery electrode may be a positive electrode or a negative electrode but is preferably a negative electrode. The nonaqueous electrolyte secondary battery is preferably a lithium-ion secondary battery.

The nonaqueous electrolyte secondary battery electrode may include a current collector and an active material layer formed on the current collector, and the active material layer is formed by using the electrode coating material described above. Specifically, the electrode can be produced by applying the electrode coating material to the current collector and drying the electrode coating material.

The current collector may be any electronic conductor that does not adversely affect the assembled nonaqueous electrolyte secondary battery. For example, copper, stainless steel, nickel, aluminum, titanium, baked carbon, conductive polymers, conductive glass, Al-Cd alloys, and the like can be used; alternatively, for the purpose of improving adhesiveness, electrical conductivity, and oxidation resistance, a member made of copper or the like whose surface is treated with carbon, nickel, titanium, silver, or the like can be used. The surfaces of these current collectors may be subjected to an oxidation treatment. With regard to the shape of the current collector, not only foil-like materials but also other molded materials such as film-like materials, sheet-like materials, net-like materials, punched or expanded materials, lath materials, porous materials, and foamed materials may also be used.

In one embodiment, the nonaqueous electrolyte secondary battery includes a negative electrode, a positive electrode, a separator disposed between the negative electrode and the positive electrode, and an electrolyte, and an electrode produced using the above electrode coating material is used as the negative electrode and/or the positive electrode (preferably the negative electrode). In one embodiment, the nonaqueous electrolyte secondary battery may include a stack in which negative electrodes and positive electrodes are alternately stacked with separators interposed therebetween, a container that houses the stack, and an electrolyte such as a nonaqueous electrolyte solution poured in the container. For example, a nonaqueous electrolyte obtained by dissolving a lithium salt serving as a supporting electrolyte in an organic solvent can be used to thereby constitute a lithium-ion secondary battery.

EXAMPLES

Hereinafter, the present invention will be described in more detail on the basis of Examples and Comparative Examples; however, the present invention is not limited thereto.

Details of components used in Examples and Comparative Examples are described below.

[Component (A)]

·CNT-1: Single-wall carbon nanotube (SWCNT), Purity = 96.5% by mass, Average diameter = 1.6 nm, Average fiber length = 5 $\mu$m, "TUBALL BATT" manufactured by OCSiAl

·CNT-2: Multi-wall carbon nanotube (MWCNT), Purity = 98% by mass, Average diameter = 10 nm, Average fiber length = 10 $\mu$m, "FT9000" manufactured by Cnano Technology Ltd.

[Component (B)]

·CMC-1: Carboxymethyl cellulose sodium salt, Degree of etherification = 0.75, Weight-average molecular weight = 150,000, Product synthesized by Synthesis Example 1 below

(Synthesis Example 1)

A solvent (isopropyl alcohol/water = 80/20 (mass ratio)) (2,020 g), 579 g of a 50 mass% aqueous sodium hydroxide solution, and a total of 550 g of chipped cellulose (165 g of conifer N-DSP and 385 g of hardwood L-DSP) were fed into a twin-screw kneader reactor and subjected to an alkali cellulose formation reaction at 25°C for 90 minutes. Subsequently, a mixture whose temperature was adjusted to 25°C and which contained 330 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-1).

·CMC-2: Carboxymethyl cellulose sodium salt, Degree of etherification = 0.76, Weight-average molecular weight = 200,000, Product synthesized by Synthesis Example 2 below

(Synthesis Example 2)

A solvent (isopropyl alcohol/water = 80/20 (mass ratio)) (2,020 g), 579 g of a 50 mass% aqueous sodium hydroxide solution, and 550 g of chipped cellulose (conifer N-DSP) were fed into a twin-screw kneader reactor and subjected to an alkali cellulose formation reaction at 25°C for 120 minutes. Subsequently, a mixture whose temperature was adjusted to 25°C and which contained 334 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-2).

·CMC-3: Carboxymethyl cellulose sodium salt, Degree of etherification = 0.74, Weight-average molecular weight = 120,000, Product synthesized by Synthesis Example 3 below

(Synthesis Example 3)

A solvent (isopropyl alcohol/water = 80/20 (mass ratio)) (2,020 g), 579 g of a 50 mass% aqueous sodium hydroxide solution, and 550 g of chipped cellulose (hardwood L-DSP) were fed into a twin-screw kneader reactor and subjected to an alkali cellulose formation reaction at 25°C for 90 minutes. Subsequently, a mixture whose temperature was adjusted to 25°C and which contained 325 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-3).

·CMC-4: Carboxymethyl cellulose sodium salt, Degree of etherification = 0.76, Weight-average molecular weight = 250,000, Product synthesized by Synthesis Example 4 below

(Synthesis Example 4)

A solvent (isopropyl alcohol/water = 80/20 (mass ratio)) (2,020 g), 579 g of a 50 mass% aqueous sodium hydroxide solution, and 550 g of chipped cellulose (conifer N-DSP) were fed into a twin-screw kneader reactor and subjected to an alkali cellulose formation reaction at 25°C for 90 minutes. Subsequently, a mixture whose temperature was adjusted to 25°C and which contained 334 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-4).

·CMC-5: Carboxymethyl cellulose sodium salt, Degree of etherification = 0.66, Weight-average molecular weight = 158,000, Product synthesized by Synthesis Example 5 below

(Synthesis Example 5)

A solvent (isopropyl alcohol/water = 80/20 (mass ratio)) (2,020 g), 579 g of a 50 mass% aqueous sodium hydroxide solution, and a total of 550 g of chipped cellulose (165 g of conifer N-DSP and 385 g of hardwood L-DSP) were fed into a twin-screw kneader reactor and subjected to an alkali cellulose formation reaction at 25°C for 90 minutes. Subsequently, a mixture whose temperature was adjusted to 25°C and which contained 290 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-5) .

·CMC-6: Carboxymethyl cellulose sodium salt, Degree of etherification = 0.85, Weight-average molecular weight = 149,000, Product synthesized by Synthesis Example 6 below

(Synthesis Example 6)

A solvent (isopropyl alcohol/water = 80/20 (mass ratio)) (2,020 g), 579 g of a 50 mass% aqueous sodium hydroxide solution, and a total of 550 g of chipped cellulose (165 g of conifer N-DSP and 385 g of hardwood L-DSP) were fed into a twin-screw kneader reactor and subjected to an alkali cellulose formation reaction at 25°C for 90 minutes. Subsequently, a mixture whose temperature was adjusted to 25°C and which contained 374 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-6).

·CMC-7: Carboxymethyl cellulose sodium salt, Degree of etherification = 0.73, Weight-average molecular weight = 106,000, Product synthesized by Synthesis Example 7 below

(Synthesis Example 7)

A solvent (isopropyl alcohol/water = 80/20 (mass ratio)) (2,020 g), 579 g of a 50 mass% aqueous sodium hydroxide solution, and 550 g of chipped cellulose (hardwood L-DSP) were fed into a twin-screw kneader reactor and subjected to an alkali cellulose formation reaction at 25°C for 120 minutes. Subsequently, a mixture whose temperature was adjusted to 25°C and which contained 321 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-7).

·CMC-8: Carboxymethyl cellulose sodium salt, Degree of etherification = 0.69, Weight-average molecular weight = 314,000, Product synthesized by Synthesis Example 8 below

(Synthesis Example 8)

A solvent (isopropyl alcohol/water = 80/20 (mass ratio)) (2,020 g), 579 g of a 50 mass% aqueous sodium hydroxide solution, and a total of 550 g of chipped cellulose (165 g of linter pulp and 385 g of conifer N-DSP) were fed into a twin-screw kneader reactor and subjected to an alkali cellulose formation reaction at 25°C for 90 minutes. Subsequently, a mixture whose temperature was adjusted to 25°C and which contained 303 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-8).

·CMC-9: Carboxymethyl cellulose sodium salt, Degree of etherification = 0.69, Weight-average molecular weight = 510,000, Product synthesized by Synthesis Example 9 below

(Synthesis Example 9)

A solvent (isopropyl alcohol/water = 80/20 (mass ratio)) (2,020 g), 579 g of a 50 mass% aqueous sodium hydroxide solution, and a total of 550 g of chipped cellulose (385 g of linter pulp and 165 g of conifer N-DSP) were fed into a twin-screw kneader reactor and subjected to an alkali cellulose formation reaction at 25°C for 90 minutes. Subsequently, a mixture whose temperature was adjusted to 25°C and which contained 303 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-9).

·CMC-10: Carboxymethyl cellulose sodium salt, Degree of etherification = 0.69, Weight-average molecular weight = 860,000, Product synthesized by Synthesis Example 10 below

(Synthesis Example 10)

A solvent (isopropyl alcohol/water = 80/20 (mass ratio)) (2,020 g), 579 g of a 50 mass% aqueous sodium hydroxide solution, and 550 g of chipped cellulose (linter pulp) were fed into a twin-screw kneader reactor and subjected to an alkali cellulose formation reaction at 25°C for 90 minutes. Subsequently, a mixture whose temperature was adjusted to 25°C and which contained 303 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-10).

·CMC-11: Carboxymethyl cellulose sodium salt, Degree of etherification = 0.90, Weight-average molecular weight = 154,000, Product synthesized by Synthesis Example 11 below

(Synthesis Example 11)

A solvent (isopropyl alcohol/water = 80/20 (mass ratio)) (2,020 g), 579 g of a 50 mass% aqueous sodium hydroxide solution, and a total of 550 g of chipped cellulose (165 g of conifer N-DSP and 385 g of hardwood L-DSP) were fed into a twin-screw kneader reactor and subjected to an alkali cellulose formation reaction at 25°C for 90 minutes. Subsequently, a mixture whose temperature was adjusted to 25°C and which contained 400 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-11).

·CMC-12: Carboxymethyl cellulose sodium salt, Degree of etherification = 0.61, Weight-average molecular weight = 151,000, Product synthesized by Synthesis Example 12 below

(Synthesis Example 12)

A solvent (isopropyl alcohol/water = 80/20 (mass ratio)) (2,020 g), 579 g of a 50 mass% aqueous sodium hydroxide solution, and a total of 550 g of chipped cellulose (165 g of conifer N-DSP and 385 g of hardwood L-DSP) were fed into a twin-screw kneader reactor and subjected to an alkali cellulose formation reaction at 25°C for 90 minutes. Subsequently, a mixture whose temperature was adjusted to 25°C and which contained 268 g of monochloroacetic acid and 152 g of a solvent (isopropyl alcohol/water = 80/20 (mass ratio)) was added dropwise to the resulting reaction mixture over a period of 60 minutes, the temperature was then increased to 78°C over a period of 25 minutes, and an etherification reaction was further performed for 70 minutes. Subsequently, the resulting reaction mixture was cooled to 60°C, the pH was adjusted to 8.5 with a 50 mass% aqueous acetic acid solution, and the reaction solvent was then vaporized and recovered using a vacuum filter to obtain a crude carboxymethyl cellulose sodium salt. The crude carboxymethyl cellulose sodium salt was washed with methanol such that the amount of methanol was 10 times the mass of the obtained crude carboxymethyl cellulose sodium salt, and dried at 105°C for 45 minutes. The resulting dried product was pulverized using an impact mill (Pulverizer manufactured by Hosokawa Micron Corporation) to obtain a carboxymethyl cellulose sodium salt (CMC-12).

[Examples 1 to 15 and Comparative Examples 1 to 11]

In Example 1, 0.80 g of CNT-1 and 1.20 g of CMC-1 were weighed in a 200 mL beaker, 98.0 g of water was added thereto, and the resulting liquid mixture was mixed under stirring with a stirrer (1,000 rpm) for 12 hours. Subsequently, dispersion was performed at an output of 100 $\mu$A for 90 minutes using a device which was an ultrasonic homogenizer ("US-600T" manufactured by NIHONSEIKI KAISHA LTD., with a circulation unit) to which a tube pump was connected, while the liquid mixture was circulated to obtain a carbon nanotube dispersion liquid.

In Examples 2 to 15 and Comparative Examples 1 to 11, carbon nanotube dispersion liquids were obtained as in Example 1 except that the types and amounts of components used were changed as shown in Tables 1 and 2.

In Tables 1 and 2, regarding the amount of component (A) blended, the numerical value in parentheses indicates a blending amount in terms of SWCNT as to CNT-1 and indicates a blending amount in terms of MWCNT as to CNT-2. The concentration of component (A) is the concentration of CNTs contained in 100% by mass of the dispersion liquid. (B)/(A) is the mass ratio of CMC to the amount of CNTs.

For each of the carbon nanotube dispersion liquids of Examples 1 to 15 and Comparative Examples 1 to 11, dispersibility, dispersion stability, viscosity, electrode coatability, and battery performance (cycle characteristics) were evaluated. The evaluation methods are as follows.

[Dispersibility]

The carbon nanotube dispersion liquid was diluted with water such that the CNT content became 0.1% by mass, a preparation was then prepared, and remaining coarse particles were observed with an optical microscope (magnification: 35 times). The sizes of aggregates present in an observation area of 5 mm$^2$ were measured, dispersibility of carbon nanotubes was evaluated in the following five grades, and 3 or more was evaluated as acceptable.

5: The number of aggregates with a size of less than 0.6 mm is 2 or less, the number of aggregates with a size of 0.6 mm or more and less than 1 mm is 1 or less, and there are no aggregates with a size of 1 mm or more.
4: The number of aggregates with a size of less than 0.6 mm is 3 or more, the number of aggregates with a size of 0.6 mm or more and less than 1 mm is 1 or less, and there are no aggregates with a size of 1 mm or more.
3: The number of aggregates with a size of 0.6 mm or more and less than 1 mm is 2 or more, and there are no aggregates with a size of 1 mm or more.
2: There are aggregates with a size of 1 mm or more and less than 2 mm, but there are no aggregates with a size of 2 mm or more.
1: There are aggregates with a size of 2 mm or more.

[Dispersion stability]

The carbon nanotube dispersion liquid was left to stand for one month, water was added such that the CNT content became 0.001% by mass, and an absorbance (A1) at a wavelength specific to carbon nanotubes was measured with a UV-visible spectrophotometer (model number: U-3900H, manufactured by Hitachi, Ltd.). Subsequently, centrifugal separation was performed with a centrifugal separator (model number: CF16RN, manufactured by Eppendorf Himac Technologies Co., Ltd.) at 5,000 × g (500 × g for MWCNT) and 25°C for 80 minutes, and an absorbance (A2) of the supernatant liquid after the centrifugal separation was measured in the same manner. A rate of change in absorbance before and after centrifugation was determined by a formula below. As the wavelength specific to carbon nanotubes, 503 nm, which is specific to metallic carbon nanotubes, was used. A larger value of the rate of change in absorbance means that sedimentation due to centrifugal separation of carbon nanotubes that have aggregated over time is less, and dispersion stability is better. Dispersion stability was evaluated in the following five grades, and 3 or more was evaluated as acceptable.

Rate of change in absorbance before and after centrifugation (%) = (A2/A1) × 100

5: The value of the rate of change in absorbance is 82% or more.
4: The value of the rate of change in absorbance is 78% or more and less than 82%.
3: The value of the rate of change in absorbance is 74% or more and less than 78%.
2: The value of the rate of change in absorbance is 70% or more and less than 74%.
1: The value of the rate of change in absorbance is less than 70%.

[Viscosity]

The viscosity of the carbon nanotube dispersion liquid was measured with a B-type viscometer ("TVB-10", manufactured by Toki Sangyo **Co.,** Ltd.). Conditions during the measurement were 25°C and 6 rpm (3 minutes). The results of the viscosity evaluation were indicated by the following five grades.

5: less than 4 Pa·s
4: 4 Pa·s or more and less than 6 Pa·s
3: 6 Pa·s or more and less than 8 Pa·s
2: 8 Pa·s or more and less than 10 Pa·s
1: 10 Pa·s or more

[Electrode coatability]

As a negative electrode active material, SiO (average particle size: 4.5 $\mu$m, specific surface area: 5.5 m$^2$/g) and graphite (average particle size: 18 $\mu$m, specific surface area: 3.2 m$^2$/g) in an amount of 100 parts by mass (content ratio 20/80); as a conductive agent, a carbon nanotube dispersion liquid in an amount of 0.2 parts by mass in terms of amount of carbon nanotubes and acetylene black in an amount of 1.0 part by mass; as a viscosity improver, a 1.5 mass% aqueous solution of a carboxymethyl cellulose sodium salt ("CELLOGEN (registered trademark) BSH-6" manufactured by DKS Co. Ltd.) in an amount of 0.65 parts by mass in terms of solid content; as a binder, an aqueous dispersion of a polyurethane sodium salt obtained by Synthesis Example P1 described below in an amount of 3.5 parts by mass in terms of solid content; and ion-exchanged water were used, and these were mixed together with a planetary mixer to prepare negative electrode slurry having a solid content of 49% by mass (a solid content of 39% by mass only in Comparative Example 2). An electrolytic copper foil having a thickness of 10 $\mu$m was used as a current collector, and a negative electrode mixture layer composed of the negative electrode slurry was formed on the electrolytic copper foil. Specifically, the negative electrode slurry was applied onto the electrolytic copper foil with a coater, and the resulting electrolytic copper foil was subjected to a roll press treatment and to drying under reduced pressure at 130°C to obtain a negative electrode having 5.8 to 6.6 mg/cm$^2$ of the negative electrode active material. The surface state at this time was observed and evaluated in the following five grades, and 3 or more was evaluated as acceptable.

> 5: The color tone of the electrode surface is uniform, and neither irregularities due to aggregates nor streaks due to shaving of the electrode are observed.
> 4: Although a wave stripe pattern due to physical properties of the coating material is observed on the electrode surface, neither irregularities due to aggregates nor streaks due to shaving of the electrode are observed.
> 3: Although irregularities due to aggregates are observed on the electrode surface, streaks due to shaving of the electrode are not observed.
> 2: Irregularities due to aggregates are observed on the electrode surface, and streaks due to shaving of the electrode are also observed.
> 1: Coating is difficult.

Synthesis Example P1:

To a four-necked flask equipped with a stirrer, a reflux condenser, a thermometer, and a nitrogen inlet tube, 71.3 parts by mass of polybutadiene polyol ("Poly bd R-45HT" manufactured by Idemitsu Kosan Co., Ltd., average hydroxyl value: 46.5 mgKOH/g, the number of active hydrogen groups: 2.32), 4.2 parts by mass of dimethylol propionic acid (the number of active hydrogen groups: 2), 24.5 parts by mass of dicyclohexylmethane diisocyanate, and 100 parts by mass of methyl ethyl ketone were added and caused to react at 75°C for four hours to obtain a methyl ethyl ketone solution of a urethane prepolymer having a free isocyanate group content of 2.5% by mass relative to the non-volatile content. This solution was cooled to 45°C, neutralized by adding 1.25 parts by mass of sodium hydroxide, and subsequently emulsified and dispersed using a homogenizer while 300 parts by mass of water was gradually added. Subsequently, an aqueous solution prepared by diluting 1.6 parts by mass of ethylenediamine (the number of active hydrogen groups: 2) with 100 parts by mass of water was added and a chain extension reaction was performed for one hour. This was subjected to removal of the solvent under reduced pressure and heating at 50°C to obtain an aqueous dispersion of polyurethane sodium salt having a non-volatile content of about 30% by mass.

[Battery performance (Cycle characteristics)]

Production of positive electrode for evaluation:
LiNiCoAl (NCA) (92 parts by mass) serving as a positive electrode active material, 4 parts by mass of acetylene black ("Li-400" manufactured by Denka Company Limited) serving as a conductive auxiliary agent, 4 parts by mass of polyvinylidene fluoride serving as a binder, and 49 parts by mass of N-methyl-2-pyrrolidone serving as a dispersion medium were mixed together with a planetary mixer to prepare positive electrode slurry such that the solid content became 69% by mass. The positive electrode slurry was applied onto an aluminum foil having a thickness of 15 $\mu$m with a coater, the resulting aluminum foil was dried at 130°C and then subjected to a roll press treatment to obtain a positive electrode having 16.6 mg/cm$^2$ of the positive electrode active material.

Production of lithium-ion secondary battery:
The positive electrode obtained as described above and the negative electrode produced in the electrode coatability evaluation were combined and stacked such that a polyolefin-based (PE/PP/PE) separator serving as a separator was disposed between the electrodes, and a positive electrode terminal and a negative electrode terminal were ultrasonically welded to the positive and negative electrodes, respectively. The resulting stack was placed in an aluminum laminate package, and the aluminum laminate package was heat-sealed except for an opening for liquid injection. A battery before liquid injection, the battery having a positive electrode area of 18 cm$^2$ and a negative electrode area of 19.8 cm$^2$, was produced. Next, an electrolyte solution prepared by dissolving LiPF$_6$ (1.0 mol/L) in a solvent mixture of ethylene carbonate and diethyl carbonate (in a volume ratio of 30/70) was injected, and the opening was heat-sealed to obtain a battery for evaluation.

Evaluation of battery performance:

The lithium-ion secondary battery produced above was subjected to a performance test of charge-discharge cycle characteristics at 20°C. The charge-discharge cycle characteristics were measured under the following conditions. CC (constant current) charging at a current density corresponding to 0.5 C was performed to 4.2 V and subsequently switched to CV (constant voltage) charging at 4.2 V, charging was performed for 1.5 hours, and CC discharging at a current density corresponding to 0.5 C was then performed to 2.7 V. This cycle was performed at 20°C 300 times, and the ratio of a 1 C discharge capacity after the 300 cycles to a 1 C discharge capacity at the first cycle was determined as a 1 C charge-discharge cycle retention. The cycle retention at this time was evaluated in the following five grades, and 3 or more was evaluated as acceptable.

5: The 1 C charge-discharge cycle retention is 95% or more.
4: The 1 C charge-discharge cycle retention is 90% or more and less than 95%.
3: The 1 C charge-discharge cycle retention is 80% or more and less than 90%.
2: The 1 C charge-discharge cycle retention is 70% or more and less than 80%.
1: The 1 C charge-discharge cycle retention is less than 70%.

[Table 1]

|  | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| Composition (parts by mass) |  |  |  |  |  |  |  |  |  |  |  |  |  |  |  |
| CNT-1 (SWCNT) | 0.80 (0.77) | 0.80 (0.77) | 0.80 (0.77) | 0.80 (0.77) | 0.80 (0.77) | 0.80 (0.77) | 1.00 (0.97) | 0.60 (0.58) | 0.50 (0.48) | 0.80 (0.77) | 0.80 (0.77) | 0.80 (0.77) | 0.80 (0.77) | 0.60 (0.58) | 0.50 (0.48) |
| CNT-2 (MWCNT) |  |  |  |  |  |  |  |  |  |  |  |  |  |  |  |
| CMC-1 (DS: 0.75, Mw: 150000) | 1.20 |  |  |  |  |  | 1.50 | 0.90 | 0.80 | 1.00 | 1.60 | 0.40 | 0.80 | 0.60 | 0.50 |
| CMC-2 (DS: 0.76, Mw: 200000) |  | 1.20 |  |  |  |  |  |  |  |  |  |  |  |  |  |
| CMC-3 (DS: 0.74, Mw: 120000) |  |  | 1.20 |  |  |  |  |  |  |  |  |  |  |  |  |
| CMC-4 (DS: 0.76, Mw: 250000) |  |  |  | 1.20 |  |  |  |  |  |  |  |  |  |  |  |
| CMC-5 (DS: 0.66, Mw: 158000) |  |  |  |  | 1.20 |  |  |  |  |  |  |  |  |  |  |
| CMC-6 (DS: 0.85, Mw: 149000) |  |  |  |  |  | 1.20 |  |  |  |  |  |  |  |  |  |
| CMC-7 (DS: 0.73, Mw: 106000) |  |  |  |  |  |  |  |  |  |  |  | 0.80 | 0.40 |  |  |
| CMC-8 (DS: 0.69, Mw: 314000) |  |  |  |  |  |  |  |  |  |  |  |  |  |  |  |

(continued)

| | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|
| Composition (parts by mass) | | | | | | | | | | | | | | | |
| CMC-9 (DS: 0.69, Mw: 510000) | | | | | | | | | | | | | | ————— - _ 0.30 | |
| CMC-10 (DS: 0.69, Mw: 860000) | | | | | | | | | | | | | | | 0.20 |
| CMC-11 (DS: 0.9, Mw: 154000) | | | | | | | | | | | | | | | |
| CMC-12 (DS: 0.61, Mw: 151000) | | | | | | | | | | | | | | | |
| Water | 98.0 | 98.0 | 98.0 | 98.0 | 98.0 | 98.0 | 97.5 | 98.5 | 98.8 | 98.2 | 97.6 | 98.0 | 98.0 | 98.5 | 98.8 |
| Total | 100 | 100 | 100 | 100 | 100 | 100 | 100 | 100 | 100 | 100 | 100 | 100 | 100 | 100 | 100 |
| Concentration of component (A) (mass%) | 0.77 | 0.77 | 0.77 | 0.77 | 0.77 | 0.77 | 0.97 | 0.58 | 0.48 | 0.77 | 0.77 | 0.77 | 0.77 | 0.58 | 0.48 |
| (B)/(A) | 1.55 | 1.55 | 1.55 | 1.55 | 1.55 | 1.55 | 1.55 | 1.55 | 1.66 | 1.30 | 2.07 | 1.55 | 1.55 | 1.55 | 1.45 |
| Evaluation | | | | | | | | | | | | | | | |
| Dispersibility | 5 | 5 | 5 | 5 | 4 | 5 | 5 | 5 | 5 | 4 | 4 | 5 | 5 | 5 | 5 |
| Dispersion stability | 5 | 5 | 5 | 5 | 5 | 4 | 5 | 5 | 4 | 3 | 5 | 4 | 5 | 5 | 5 |
| Viscosity | 5 | 4 | 5 | 3 | 5 | 5 | 4 | 5 | 5 | 4 | 3 | 5 | 5 | 5 | 5 |
| Electrode coatability | 5 | 5 | 4 | 4 | 5 | 5 | 4 | 5 | 5 | 4 | 3 | 4 | 5 | 5 | 5 |
| Battery performance | 5 | 5 | 4 | 5 | 5 | 5 | 5 | 5 | 5 | 4 | 4 | 4 | 5 | 5 | 5 |

[Table 2]

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|
| Composition (parts by mass) | | | | | | | | | | | |
| CNT-1 (SWCNT) | 1.20 (1.16) | 0.20 (0.19) | 0.80 (0.77) | 0.80 (0.77) | 0.80 (0.77) | 0.80 (0.77) | 0.80 (0.77) | 0.80 (0.77) | 0.80 (0.77) | 0.80 (0.77) | |
| CNT-2 (MWCNT) | | | | | | | | | | | 2.0 (1.96) |
| CMC-1 (DS: 0.75,Mw: 150000) | 1.80 | 0.30 | 0.80 | 2.40 | | | | | | | 1.20 |
| CMC-2 (DS: 0.76, Mw: 200000) | | | | | | | | | | | |
| CMC-3 (DS: 0.74, Mw: 120000) | | | | | | | | | | | |
| CMC-4 (DS: 0.76, Mw: 250000) | | | | | | | | | | | |
| CMC-5 (DS: 0.66, Mw: 158000) | | | | | | | | | | | |
| CMC-6 (DS: 0.85, Mw: 149000) | | | | | | | | | | | |
| CMC-7 (DS: 0.73, Mw: 106000) | | | | | 1.20 | | | | | | |
| CMC-8 (DS. 0.69,Mw: 314000) | | | | | | 1.20 | | | | | |

| | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|
| Composition (parts by mass) | | | | | | | | | | | |
| CMC-9 (DS: 0.69, Mw: 510000) | | | | | | | 1.20 | | | | |
| CMC-10 (DS: 0.69, Mw: 860000) | | | | | | | | 1.20 | | | |
| CMC-11 (DS: 0.9, Mw: 154000) | | | | | | | | | 1.20 | | |
| CMC-12 (DS: 0.61, Mw: 151000) | | | | | | | | | | 1.20 | |
| Water | 97.0 | 99.5 | 98.4 | 96.8 | 98.0 | 98.0 | 98.0 | 98.0 | 98.0 | 98.0 | 98.0 |
| Total | 100 | 100 | 100 | 100 | 100 | 100 | 100 | 100 | 100 | 100 | 100 |
| Concentration of component (A) (mass%) | 1.16 | 0.19 | 0.77 | 0.77 | 0.77 | 0.77 | 0.77 | 0.77 | 0.77 | 0.77 | 1.96 |
| (B)/(A) | 1.55 | 1.55 | 1.04 | 3.11 | 1.55 | 1.55 | 1.55 | 1.55 | 1.55 | 1.55 | 0.61 |
| Evaluation | | | | | | | | | | | |
| Dispersibility | 3 | 3 | 2 | 3 | 5 | 3 | 3 | 1 | 2 | 3 | 5 |
| Dispersion stability | 3 | 2 | 2 | 2 | 4 | 3 | 3 | 2 | 3 | 2 | 5 |
| Viscosity | 2 | 5 | 4 | 1 | 5 | 2 | 2 | 1 | 3 | 3 | 5 |
| Electrode coatability | 2 | 3 | 1 | 1 | 3 | 2 | 1 | 1 | 3 | 2 | 5 |
| Battery performance | 2 | 2 | 1 | 1 | 2 | 3 | 2 | 1 | 2 | 2 | 1 |

EP 4 597 522 A1

The results are shown in Tables 1 and 2. In Comparative Example 1, the CNT concentration was high, and the dispersibility and the dispersion stability were just about at the acceptable level; however, the viscosity was high, and the electrode coatability and the battery performance were poor. In Comparative Example 2, the CNT concentration was low, and the dispersion stability and the battery performance were poor.

In Comparative Example 3, since the mass ratio (B)/(A) of CMC to CNT was low and the amount of CMC was small, the dispersibility and the dispersion stability were poor, and the electrode coatability and the battery performance were poor. In Comparative Example 4, since the mass ratio (B)/(A) of CMC to CNT was high and the amount of CMC was large, the viscosity was high, and the electrode coatability and the battery performance were poor.

In Comparative Example 5, although the dispersibility and the dispersion stability were good, the battery performance was poor. This is probably because adhesion of CMC to CNTs decreased due to the low molecular weight of CMC, and CNTs aggregated at the stage of the electrode coating material. In Comparative Examples 6 to 8, due to the high molecular weight of CMC, the dispersibility and the dispersion stability tended to decrease, the viscosity was high, and the electrode coatability and the battery performance were poor.

In Comparative Example 9, the dispersibility and the battery performance were poor. This is probably because adhesion of CMC to CNTs decreased due to the high degree of etherification of CMC, and the effect of the dispersant decreased. In Comparative Example 10, the degree of etherification of CMC was low, and the dispersion stability and the battery performance were poor.

In Comparative Example 11, which is an example using multi-walled carbon nanotubes, although the dispersibility and so forth were good, in an electrode with a large volume change during charging and discharging, the electrode could not follow the volume change, and the cycle characteristics were poor.

In contrast, the carbon nanotube dispersion liquids according to Examples 1 to 15 contained single-walled carbon nanotubes at high concentrations, exhibited good dispersibility and dispersion stability, had a low viscosity, exhibited good electrode coatability and battery performance, and exhibited significant improvement effects.

Note that, in various numerical ranges described in the Description, the upper limit values and the lower limit values thereof may be combined with one another, and it is to be understood that all of the combinations are described as preferred numerical ranges in the present Description. The description of a numerical range expressed using "X to Y" means X or more and Y or less.

Some embodiments according to the present invention have been described above; however, these embodiments are provided as examples and are not intended to limit the scope of the invention. These embodiments can be carried out in various other forms and can be subjected to various omissions, replacements, and modifications without departing from the spirit of the invention. These embodiments and omissions, replacements, modifications, and the like thereof are included in the scope and spirit of the invention and are similarly included in the scope of the invention as defined by the claims and equivalents thereof.

**Claims**

1. A carbon nanotube dispersion liquid comprising:

   single-walled carbon nanotubes;
   carboxymethyl cellulose and/or a salt thereof; and water,
   wherein a content of the single-walled carbon nanotubes is 0.47% to 1.00% by mass,
   the carboxymethyl cellulose and/or the salt thereof includes at least one having a degree of etherification of 0.65 to 0.85 and a weight-average molecular weight of 120,000 to 250,000, and
   a content of the carboxymethyl cellulose and/or the salt thereof is 120 to 220 parts by mass relative to 100 parts by mass of the single-walled carbon nanotubes.

2. An electrode coating material for a nonaqueous electrolyte secondary battery, the electrode coating material comprising the carbon nanotube dispersion liquid according to claim 1 and a silicon-based active material.

3. A nonaqueous electrolyte secondary battery electrode produced using the electrode coating material according to claim 2.

4. A nonaqueous electrolyte secondary battery comprising the nonaqueous electrolyte secondary battery electrode according to claim 3.

## INTERNATIONAL SEARCH REPORT

| International application No. |
| --- |
| **PCT/JP2023/031076** |

| | |
| --- | --- |
| **A. CLASSIFICATION OF SUBJECT MATTER** | |

***H01B 1/24**(2006.01)i; **H01M 4/13**(2010.01)i; **H01M 4/131**(2010.01)i; **H01M 4/139**(2010.01)i; **H01M 4/1391**(2010.01)i; **H01M 4/62**(2006.01)i*
FI: H01B1/24 A; H01M4/13; H01M4/131; H01M4/139; H01M4/1391; H01M4/62 Z

According to International Patent Classification (IPC) or to both national classification and IPC

**B. FIELDS SEARCHED**

Minimum documentation searched (classification system followed by classification symbols)

H01B1/24; H01M4/13; H01M4/131; H01M4/139; H01M4/1391; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2014/115852 A1 (TEIJIN LTD) 31 July 2014 (2014-07-31) <br> entire text | 1-4 |
| A | WO 2021/220773 A1 (TOYO INK SC HOLDINGS CO LTD) 04 November 2021 (2021-11-04) <br> entire text | 1-4 |
| A | WO 2022/070895 A1 (PANASONIC IP MAN CO LTD) 07 April 2022 (2022-04-07) <br> entire text | 1-4 |
| A | JP 7098076 B1 (DAINICHISEIKA COLOR & CHEMICALS MFG. CO., LTD.) 08 July 2022 (2022-07-08) <br> entire text | 1-4 |
| A | JP 2020-164378 A (UNIV TOKYO) 08 October 2020 (2020-10-08) <br> entire text | 1-4 |

☐ Further documents are listed in the continuation of Box C.    ☑ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **08 November 2023** | **21 November 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

## INTERNATIONAL SEARCH REPORT
### Information on patent family members

International application No.

**PCT/JP2023/031076**

| Patent document cited in search report | | | Publication date (day/month/year) | Patent family member(s) | | | Publication date (day/month/year) |
|---|---|---|---|---|---|---|---|
| WO | 2014/115852 | A1 | 31 July 2014 | US entire text | 2015/0372309 | A1 | |
| | | | | EP | 2950375 | A1 | |
| | | | | CN | 104937757 | A | |
| | | | | KR | 10-2015-0109377 | A | |
| WO | 2021/220773 | A1 | 04 November 2021 | US entire text | 2023/0187644 | A1 | |
| | | | | EP | 4145553 | A1 | |
| | | | | CN | 115461898 | A | |
| | | | | KR | 10-2023-0007337 | A | |
| WO | 2022/070895 | A1 | 07 April 2022 | CN | 116195089 | A | |
| JP | 7098076 | B1 | 08 July 2022 | WO entire text | 2023/058312 | A1 | |
| JP | 2020-164378 | A | 08 October 2020 | (Family: none) | | | |

Form PCT/ISA/210 (patent family annex) (January 2015)

**EP 4 597 522 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6860740 B
- JP 2022070810 A
- JP 2022137977 A